# EUROPEAN PATENT APPLICATION

(11) **EP 4 588 632 A1**
(43) Date of publication of application: **23.07.2025**
(21) Application number: 22967173.0
(22) Date of filing: 30.11.2022
(51) Int. Cl.: B26D 7/10, E04G 23/08

(54) **METHOD FOR DISMANTLING STRUCTURE**

(71) Applicant: Mitsubishi Heavy Industries, Ltd., Tokyo 100-8332 (JP)
(72) Inventor: KANEMASU, Masayuki, Tokyo 100-8332 (JP); SUZUKI, Akihito, Tokyo 100-8332 (JP); HIRATA, Takehiko, Tokyo 100-8332 (JP); OKUDA, Akihisa, Tokyo 100-8332 (JP)
(74) Representative: Studio Torta S.p.A.
(86) International application number: PCT/JP2022/044220
(87) International publication number: WO 2024/116340

(57) **Abstract**

A method for disassembling a structure is a method for disassembling a structure including a resin part at least partially and includes: a step of softening at least a portion of the resin part by heating the portion; and a step of separating a first side of the structure from a second side opposite to the first side across the softened portion.

## Description

### TECHNICAL FIELD

The present disclosure relates to a method for disassembling a structure.

### BACKGROUND ART

Patent Document 1 discloses a disassembling method for disassembling an existing steel tower. The disassembling method includes a step of cutting the upper tower body at the cutting position to separate a unit tower body from the lower part of the upper tower body and a step of carrying the unit tower body out to remove the unit tower body.

### Citation List

### Patent Literature

Patent Document 1: JP2010-1649A

### SUMMARY

### Problems to be Solved

Meanwhile, using the assembling method for assembling an existing steel tower disclosed in Patent Document 1 may lead to scattering of dust such as filings and shards generated when the upper tower body is cut.

In view of the above, an object of at least one embodiment of the present invention is to provide a method for disassembling a structure capable of suppressing scattering of dust upon disassembling of a structure.

### Solution to the Problems

A method for disassembling a structure according to at least one embodiment of the present invention is a method for disassembling a structure including a resin part at least partially, and includes: a step of softening at least a portion of the resin part by heating the portion; and a step of separating a portion at a first side of the structure from a portion at a second side opposite to the first side across the softened portion.

### Advantageous Effects

According to at least one embodiment of the present invention, it is possible to suppress scattering of dust upon disassembling of a structure.

### BRIEF DESCRIPTION OF DRAWINGS

FIG. 1 is a schematic diagram of a structure according to Embodiment 1.
FIG. 2 is a schematic diagram showing a method for disassembling the structure depicted in FIG. 1.
FIG. 3 is a schematic diagram of a structure according to Embodiment 2.
FIG. 4 is a schematic diagram showing a method for disassembling the structure depicted in FIG. 3.
FIG. 5 is a diagram schematically showing a step of heating a resin part where a fastener is embedded.
FIG. 6 is a diagram schematically showing a step of lowering the first member by gravity.
FIG. 7 is a diagram schematically showing a step of applying an electric current to an electrical heating wire wrapped around at least a part of the resin part.
FIG. 8 is a diagram schematically showing a step of exposing a part of the fastener from the resin part and a step of applying an electric current from the fastener.
FIG. 9 is a diagram schematically showing a step of providing a coil in the proximity of the fastener and a step of applying a high-frequency electric current to the coil.
FIG. 10 is a diagram schematically showing a state where the coil is provided at each of the first side and the second side of the fastener in the extension direction.
FIG. 11 is a schematic diagram of a meteorological tower.
FIG. 12 is a diagram schematically showing a method for disassembling the meteorological tower depicted in FIG. 11.
FIG. 13 is a diagram of a wind turbine.
FIG. 14 is a diagram schematically showing a method for disassembling the wind turbine depicted in FIG. 5.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

### [Method for Disassembling Structure according to Embodiment 1]

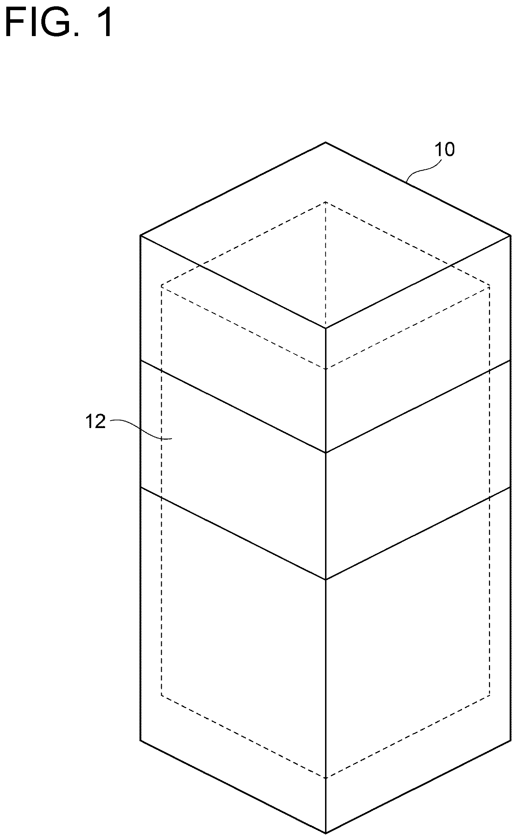

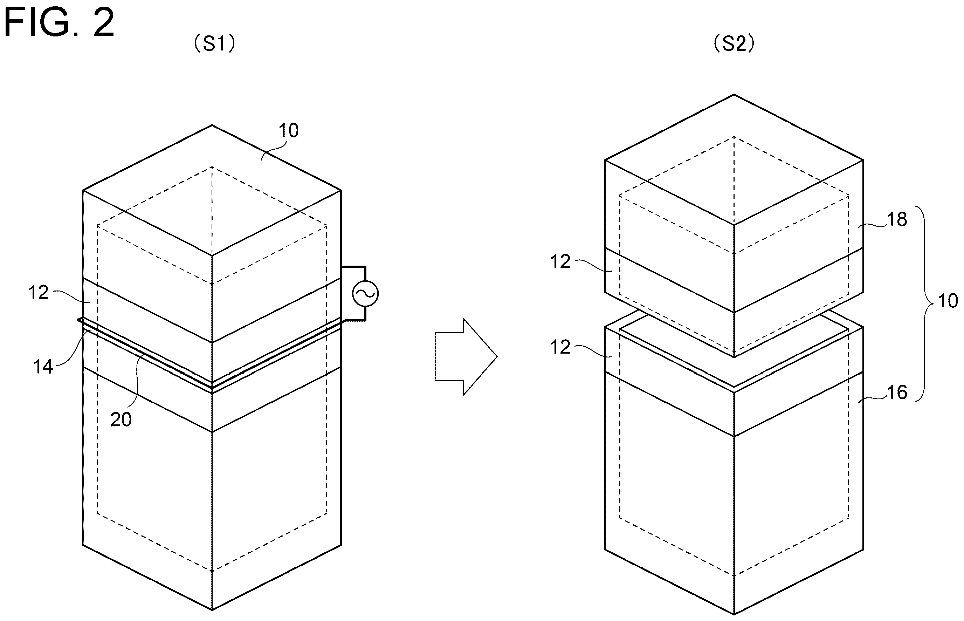

FIG. 1 is a schematic diagram of a structure 10 according to Embodiment 1. FIG. 2 is a schematic diagram showing a method for disassembling the structure depicted in FIG. 1.

The structure 10 to which the method for disassembling a structure according to Embodiment 1 is to be applied is a structure which includes a resin part 12 at least partially, and the material of the rest of the structure 10 is not limited as long as the boundary separating the structure 10 into two or more includes a resin material. Also, the shape and configuration of the structure 10 are not limited. While resin is not electrically conductive, the resin part may include a conductive body like carbon fiber reinforced plastic. The method for disassembling a structure according to Embodiment 1 is applicable to structures such as meteorological towers, wind turbines, airplanes, ships, tanks, or automobiles. Herein, the method for disassembling a structure will be described illustrating a structure 10 that is hollow and that extends in the direction of gravity, and the boundary that separates the structure 10 into two or more includes a resin material, but the structure 10 is not limited thereto. The resin part constituting the boundary that separates the structure 10 into two or more is, for instance, epoxy resin, phenol resin, or polyester resin, and includes fiber reinforced plastic (FRP), such as glass fiber reinforced plastic (GFRP), carbon fiber reinforced plastic (CFRP), and Kevlar fiber reinforced plastic (KFRP).

As depicted in FIG. 2, the method for disassembling a structure 10 includes a step (S1) of softening at least a portion 14 of a resin part 12 by heating at least a part of the portion 14, and a step (S2) of separating a portion 16 at the first side of the structure 10 from a portion 18 at the second side opposite to the first side across the softened portion 14.

In the step (S1) of softening at least the portion 14 of the resin part 12 by heating the portion 14, at least the portion14 of the resin part 12 is heated because it is unnecessary to heat the entire resin part 12. At least the portion 14 of the resin part 12 is heated by, for instance, applying an electric current to an electrical heating wire 20 wrapped around the portion 14 (resin part 12). In a case where the resin part 12 is a 180°C curable epoxy resin, the resin part 12 softens at 200°C or higher and degrades around 500°C.

In the step (S2) of separating the portion 16 at the first side of the structure 10 from the portion 18 at the second side opposite to the first side across the softened portion 14, the portion 16 at the first side of the structure is separated from the portion 18 at second side opposite to the first side across the softened portion 14 being the boundary. For instance, in a case where the structure 10 extends in the direction of gravity, the portion 16 at the lower side (first side) in the direction of gravity is separated from the portion 18 at the upper side (second side) in the direction of gravity across the softened portion 14 as the boundary, and a load may be applied to the portion 16 at the first side to separate.

According to the method for disassembling a structure 10 according to Embodiment 1, at least the portion 14 of the resin part 12 of the structure 10 is softened by heating the portion 14, and the portion 16 at the first side of the structure 10 is separated from the portion 18 at the second side opposite to the first side across the softened portion 14, whereby it is possible to suppress scattering of dust upon disassembling of the structure 10.

### [Method for disassembling a structure according to Embodiment 2]

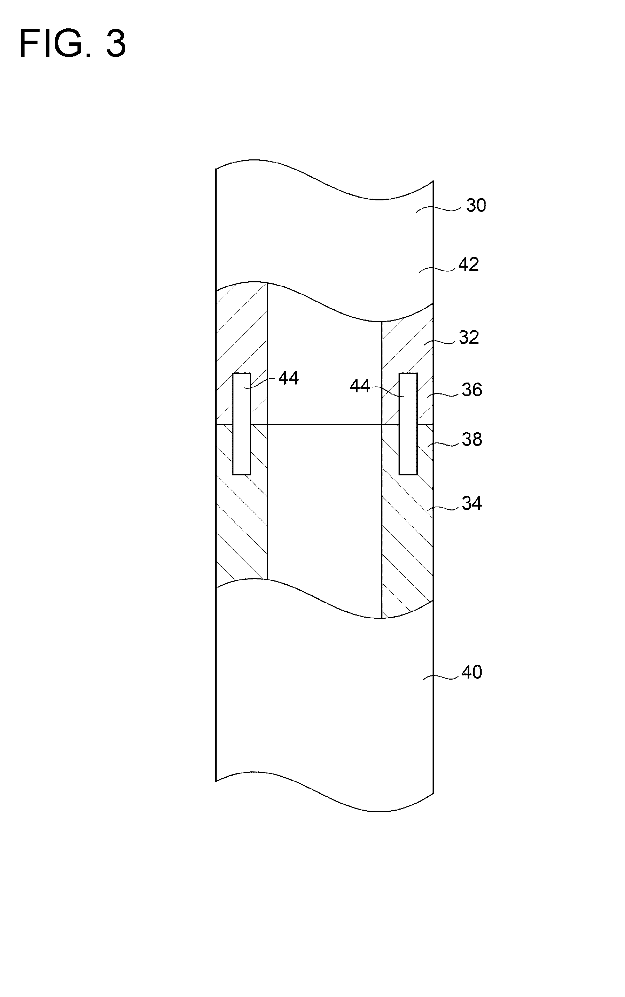

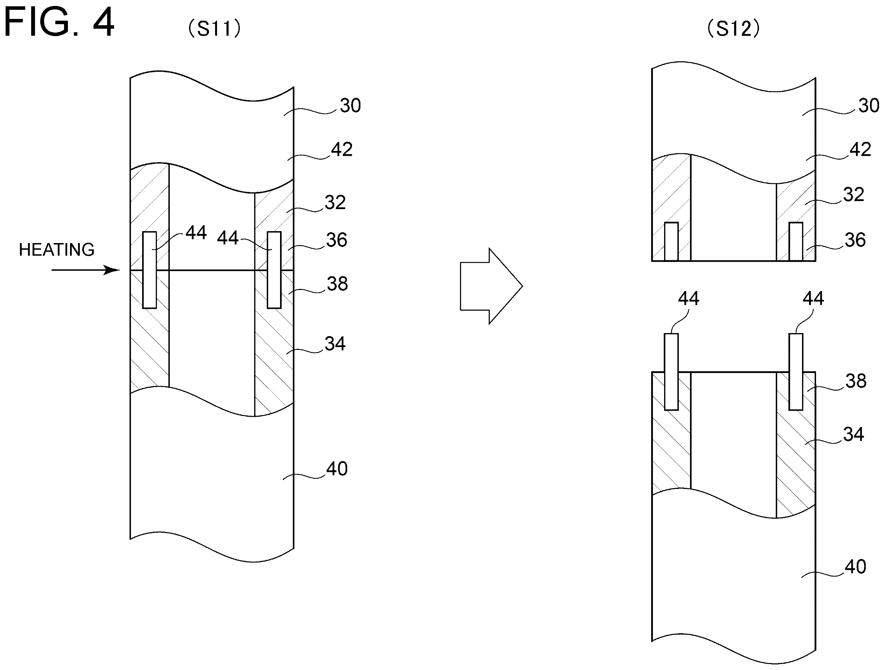

FIG. 3 is a schematic diagram of a structure 30. FIG. 4 is a schematic diagram showing a method for disassembling a structure 30 depicted in FIG. 3.

The structure 30 to which the method for disassembling a structure according to Embodiment 2 is to be applied is a structure including resin parts 32, 34 at least partially, and extends along the direction of gravity. The structure 30 includes a first member 40 disposed at a first side across the portion 36 (38) of the resin part 32, 34 to be softened, and a second member 42 disposed at the second side to be joined to the first member 40. The first member 40 and the second member 42 are fastened by a fastener 44 made of metal and embedded in the resin part 32 (34) disposed on at least one of the first member 40 or the second member 42. The fastener 44 made of metal is, for instance a bolt and a nut, one of which is to be embedded in the first member 40 and the other of which is to be embedded in the second member 42.

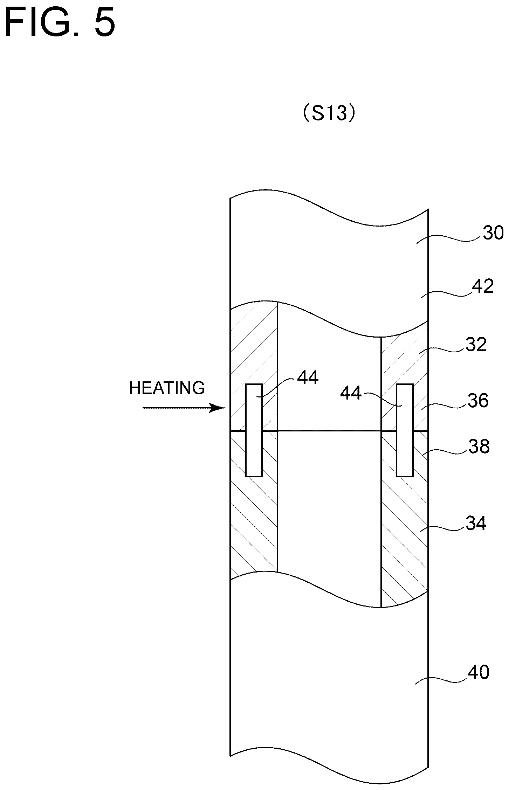

As depicted in FIG. 4, the method for disassembling a structure 30 includes a step (S11) of softening at least a portion 36 (38) of a resin part 32, 34 by heating the portion 36 (38), and a step (S12) of separating a first member 40 at a first side of the structure 30 from a second member 42 at a second side opposite to the first side across the softened portion 36 (38). The step (S11) of softening at least the portion 36 (38) of the resin part 32, 34 by heating the portion 36 (38) includes, as depicted in FIG. 5, a step (S13) of heating the resin part 32 (34) in which the fastener 44 is embedded. The resin part 32 (34) to be heated is the portion 36 (38) of the resin part 32 (34) of one of the first member 40 or the second member 42 in which the fastener 44 is embedded, and it is unnecessary to heat both of the first member 40 and the second member 42. In the example illustrated in FIG. 5, the second member 42 disposed at the upper side in the direction of gravity is heated. Alternatively, the first member 40 disposed at the lower side may be heated.

In the step (S12) of separating the first member 40 at the first side of the structure 30 from the second member 42 at the second side opposite to the first side across the softened portion 36 (38), the fastener 44 comes out from the resin part 32 (34) of one of the first member 40 or the second member 42 in which the fastener 44 is embedded, and thereby the other one of the first member 40 or the second member 42 is separated.

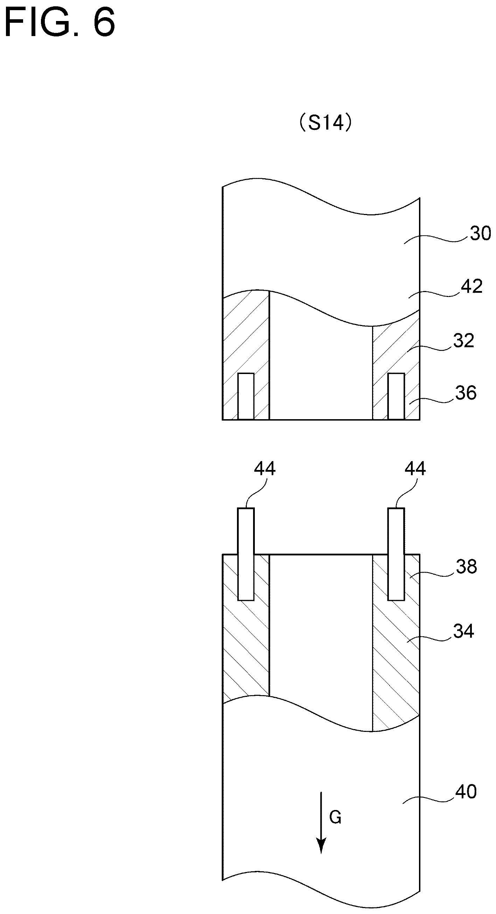

The step (S12) of separating the first member 40 at the first side of the structure 30 from the second member 42 at the second side opposite to the first side across the softened portion 36 (38) may include a step (S14) of lowering the first member 40 by gravity G, as depicted in FIG. 6. In a case where the first member 40 falling by gravity G becomes a problem, the first member 40 may be retained by a hook and a wire or the like in advance, and then the first member 40 may be lowered slowly toward the ground or sea. Alternatively, the first member 40 may be lowered slowly toward the ground or sea using a wire or a rope or the like provided diagonally with respect to the first member 40. In the example depicted in FIG. 6, the second member 42 disposed at the upper side in the direction of gravity is heated so that the fastener 44 comes out from the second member 42 and remains inside the first member 40 disposed at the lower side. Alternatively, the first member 40 may be heated so that the fastener 44 comes out from the first member 40 and remains inside the second member 42.

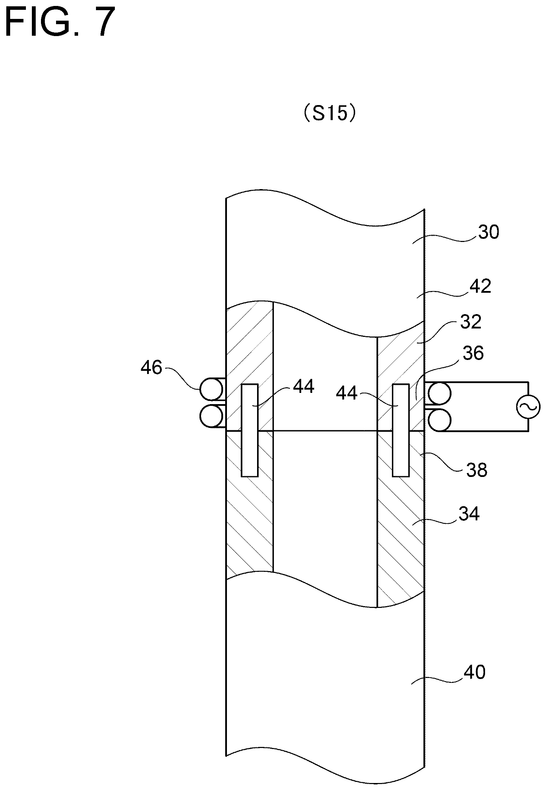

The step (S11) of softening at least the portion 36 (38) of the resin part 32 (34) by heating the portion 36 (38) may include, as depicted in FIG. 7, a step (S15) of applying an electric current to an electrical heating wire 46 wrapped around at least a portion 36 (38) of the resin part 32, 34.

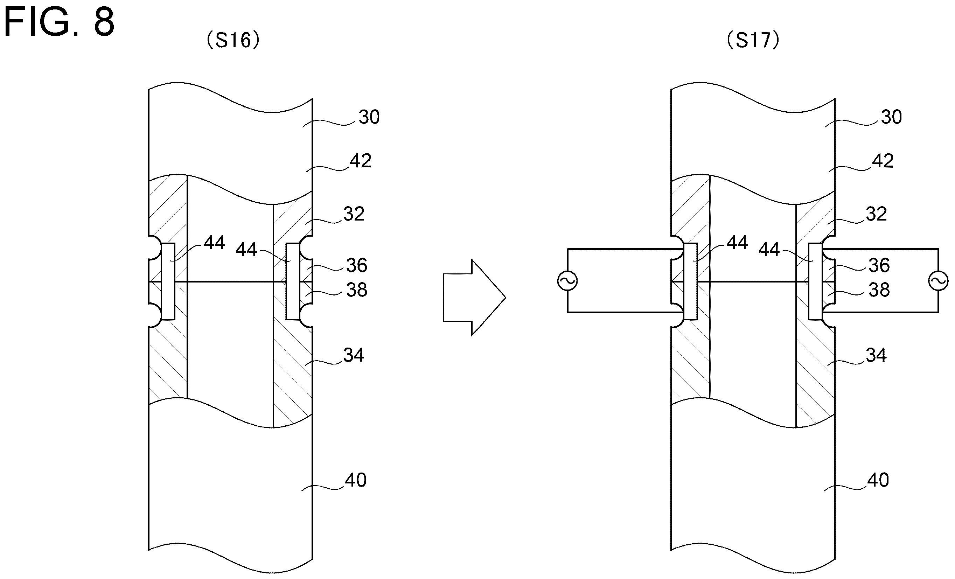

The step (S11) of softening at least the portion 36 (38) of the resin part 32 (34) by heating the portion 36 (38) may include, as depicted in FIG. 8, a step (S16) of exposing a part of the fastener 44 from the resin part 32, 34 and a step (S17) of applying an electric current from a part of the fastener 44.

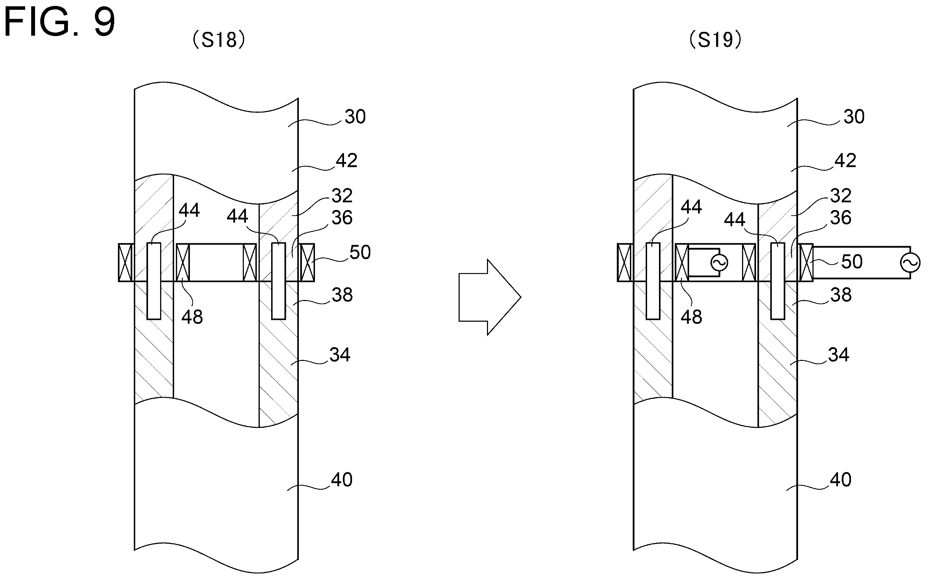

The step (S11) of softening at least the portion 36 (38) of the resin part 32 (34) by heating the portion 36 (38) includes, as depicted in FIG. 9, a step (S18) of providing a coil 48 (50) in the proximity of the fastener 44 and a step (S19) of applying a high-frequency electric current to the coil 48 (50).

In the step (S18) of providing the coil 48 (50) in the proximity of the fastener 44, for instance, the coil 48 (50) may be provided on an inner circumference or an outer circumference of the fastener 44. As long as the coil 48 (50) is capable of heating the fastener 44 by electromagnetic induction, the coil 48 (50) may be disposed on one of the inner circumference or the outer circumference of the fastener 44, or on both the inner circumference and the outer circumference of the fastener 44.

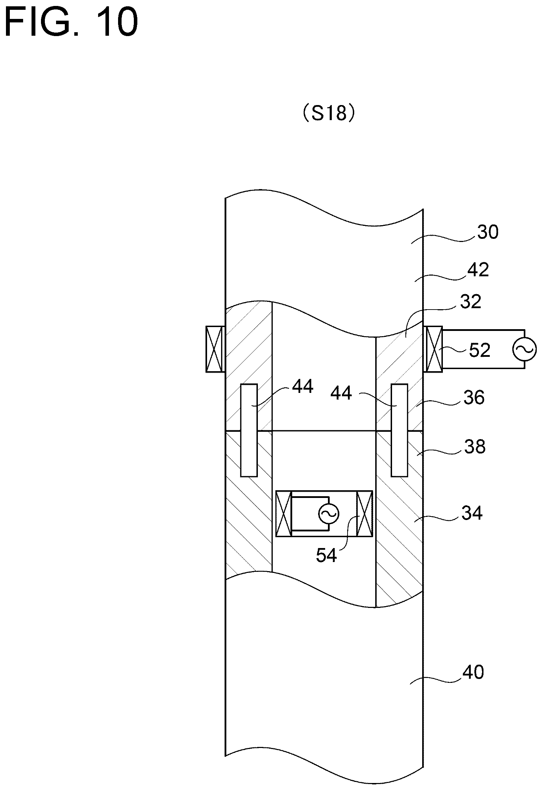

In the step (S18) of providing the coil 50, 52 in the proximity of the fastener 44, as depicted in FIG. 10, the coil 52, 54 may be provided on each of the first side and the second side of the fastener 44 in the extension direction.

According to the method for disassembling the structure 30 according to Embodiment 2, the portion 36 (38) of the resin part 32 (34) in which the fastener 44 is embedded is heated to soften the portion 36 (38) of the resin part 32 (34), and thereby the first member 40 is separated from the second member 42. Accordingly, it is possible to suppress scattering of dust upon separation of the first member 40 from the second member 42.

In a case where the structure 30 including the resin part 32 (34) at least partially is a structure 30 that extends in the direction of gravity and the step (S12) of separating the first side of the structure 30 from the second side includes a step (S14) of lowering the first side by gravity G, it is possible to separate the first side from the second side without using a heavy machine or the like.

In a case where the step (S11) of softening at least the portion 36 (38) of the resin part (32 (34)) by heating the portion 36 (38) includes a step (S15) of applying an electric current to the electrical heating wire 46 wrapped around the portion 36 (38) of the resin part 32, 34, it is possible to heat the portion 36 (38) to soften the portion 36 (38).

In a case where the step (S11) of softening at least the portion 36 (38) of the resin part (32 (34)) by heating the portion 36 (38) includes a step (16) of exposing a part of the fastener 44 from the portion 36, 38 of the resin part 32, 34 and a step (S17) of applying an electric current from a part of the fastener 44, the fastener 44 is heated, and it is possible to soften the resin around the fastener 44.

In a case where the step (S11) of softening at least the portion 36 (38) of the resin part (32 (34)) by heating the portion 36 (38) includes a step (S18) of providing the coil 48 (50) in the proximity of the fastener 44 and a step (S19) of applying a high-frequency electric current to the coil 48 (50), the fastener 44 is heated by electromagnetic induction, and thereby it is possible to soften the resin around the fastener 44.

In a case where the coil 48 (50) is provided on one of the inner circumference or the outer circumference of the fastener 44 in the step (S18) of providing the coil 48 (50) in the proximity of the fastener 44, the fastener 44 is heated by electromagnetic induction, and thereby it is possible to soften the resin around the fastener 44.

In a case where the coil 52, 54 is provided on each of the first side and the second side of the fastener 44 in the extension direction in the step (S18) of providing the coil 50, 52 in the proximity of the fastener 44, the fastener 44 is heated by electromagnetic induction, and thereby it is possible to soften the resin around the fastener 44.

### [Method for disassembling a meteorological tower]

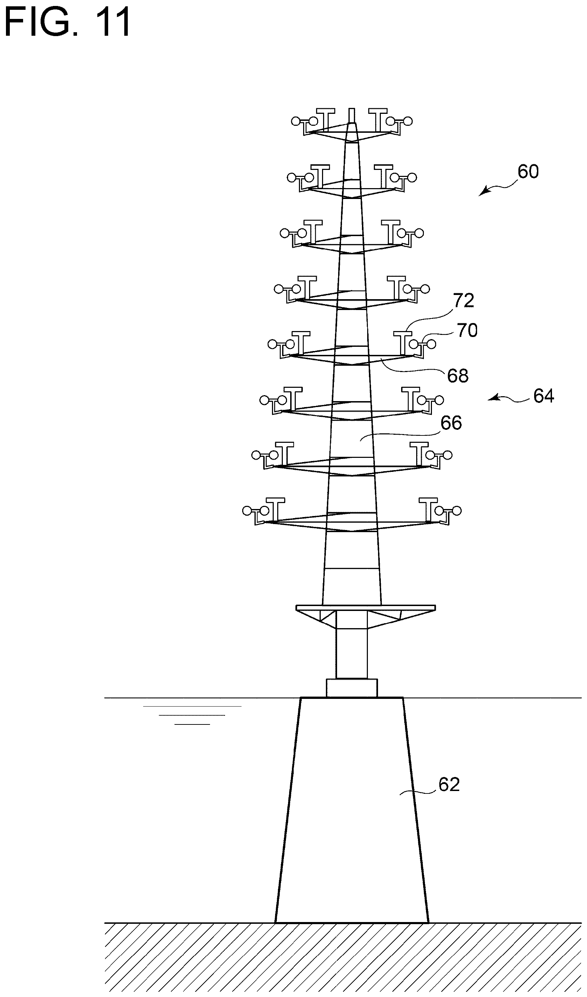

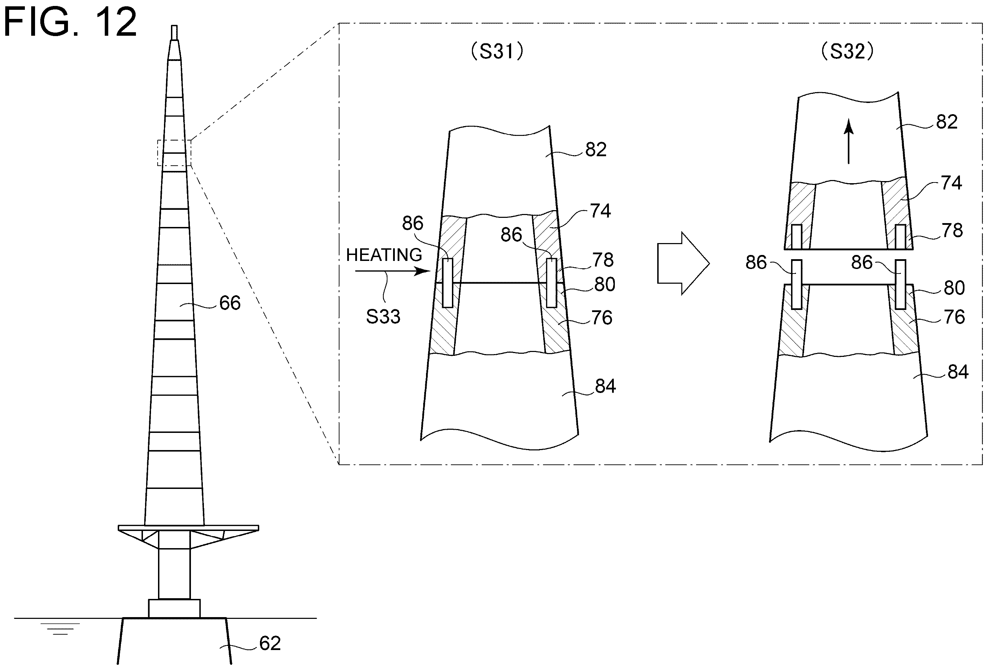

FIG. 11 is a schematic diagram of a meteorological tower 60. FIG. 12 is a schematic diagram showing a method for disassembling the meteorological tower 60 depicted in FIG. 11.

As depicted in FIG. 10, the meteorological tower 60 includes a foundation 62 and a tower 64 built on the foundation 62. The tower 64 is a structure which at least partially includes a resin part. Measurement instruments 70, 72 for measuring parameters related to weather (e.g., wind direction, wind velocity, temperature, atmospheric pressure, or precipitation) are disposed on each of branch-shaped protrusions 68 extending in a branched fashion from a tower body 66.

As depicted in FIG. 12, the tower body 66 includes a first member 72 disposed at the air side across the portion 78, 80 of the resin part 74, 76, and a second member 84 disposed at the ground side to be joined to the first member 82. The first member 82 and the second member 84 are fastened by a fastener 86 made of metal and embedded in the resin part 78 (80) disposed on at least one of the first member 82 or the second member 84. The fastener 86 made of metal is, for instance, a bolt and a nut, one of which is embedded in the first member 82 and the other one is embedded in the second member 84.

A method for disassembling the meteorological tower 60 depicted in FIG. 12 is a method for disassembling the tower body 66. The branch-shaped protrusions 68and the measurement instruments 70, 72 disposed on each of the branch-shaped protrusions 68 are dismantled before disassembling of the tower body 66. The method for disassembling the meteorological tower 60 includes a step (S31) of softening at least a portion 78 (80) of the resin part 74 (76) of the tower body 66 by heating the portion 78 (80), and a step (S32) of separating a first member 82 at a first side of the tower body 66 from a second member 84 at a second side opposite to the first side across the softened portion 78 (80). The step (S31) of softening at least a portion of the resin part 74 (76) of the tower body 66 by heating the portion 78 (80) includes a step (S33) of heating the resin part 78 (80) in which the fastener 86 is embedded. The resin part 78 (80) to be heated is a portion of the resin part 78 (80) of one of the first member 82 or the second member 84 in which the fastener 86 is embedded, and it is unnecessary to heat both of the first member 82 and the second member 84. In the example illustrated in FIG. 12, the first member 82 disposed at the upper side in the direction of gravity is heated. Alternatively, the second member 84 disposed at the lower side may be heated.

In the step (S32) of separating the first member 82 at the first side of the tower body 66 from the second member 84 at the second side opposite to the first side across the softened portion 78 (80), the first member 82 is lifted from the second member 84 with a crane, for instance, but not limited thereto. In the step (S32) of separating the first member 82 from the second member 84, the fastener 86 comes out from the resin part 78 (80) of one of the first member 82 or the second member 84 in which the fastener 86 is embedded, and thereby the other one of the first member 82 or the second member 84 is separated. In the example depicted in FIG. 12, the first member 82 disposed at the upper side in the direction of gravity is heated so that the fastener 86 comes out from the first member 82 and remains inside the second member 84 disposed at the lower side. Alternatively, the second member 84 may be heated so that the fastener 44 comes out from the second member 84 and remains inside the first member 82.

The step (S31) of softening at least the portion 78 (80) of the resin part 74 (76) by heating the portion 78 (80) may include a step of applying an electric current to an electrical heating wire wrapped around at least the portion 78 (80) of the resin part 74 (76), as in the method for disassembling the structure 30 according to the above described Embodiment 2.

The step (S31) of softening at least the portion 78 (80) of the resin part 74 (76) by heating the portion 78 (80) may include a step of exposing a part of the fastener 86 from the resin part 78, 80, and a step of applying an electric current from the part of the fastener 86, as in the method for disassembling the structure 30 according to the above described Embodiment 2.

The step (S31) of softening at least the portion 78 (80) of the resin part 74 (76) by heating the portion 78 (80) may include a step of providing a coil in the proximity of the fastener 86 and a step of applying a high-frequency electric current to the coil, as in the method for disassembling the structure 30 according to the above described Embodiment 2.

In the step of providing the coil in the proximity of the fastener 86, the coil may be provided on an inner circumference or an outer circumference of the fastener 86, as in the method for disassembling the structure according to the above described Embodiment 2. As long as the coil is capable of heating the fastener 86 by electromagnetic induction, the coil may be disposed on one of the inner circumference or the outer circumference of the fastener 86, or on both the inner circumference and the outer circumference of the fastener 86.

In the step of providing the coil in the proximity of the fastener 86, for instance, the coil may be provided on each of the first side and the second side of the fastener 86 in the extension direction, as in the method for disassembling the structure 30 according to the above described Embodiment 2.

According to the method for disassembling the meteorological tower 60 depicted in FIG. 11, the portion 78 (80) of the resin part 74 (76) in which the fastener 86 is embedded is heated to soften the portion 78 (80) of the resin part 74 (76), and thereby the first member 82 is separated from the second member 84. Accordingly, it is possible to suppress scattering of dust upon separation of the first member 82 from the second member 84.

In a case where the step (S31) of softening at least the portion 78 (80) of the resin part (74 (76)) by heating the portion 78 (80) includes a step of applying an electric current to an electrical heating wire wrapped around the portion 78 (80) of the resin part 74 (76), it is possible to heat the resin part 78 (80) and soften the resin part 78 (80).

In a case where the step (S31) of softening at least the portion 78 (80) of the resin part 74 (76) by heating the portion 78 (80) includes a step of exposing a part of the fastener 86 from a portion of the resin part 74, 76, and a step of applying an electric current from the part of the fastener 86, the fastener 86 is heated, and it is possible to soften the resin part 78, 80 around the fastener 86.

In a case where the step (S31) of softening at least the portion 78 (80) of the resin part 74 (76) by heating the portion 78 (80) includes a step of providing the coil in the proximity of the fastener 86 and a step of applying a high-frequency electric current to the coil, the fastener 86 is heated by electromagnetic induction, and thereby it is possible to soften the resin part 74, 76 around the fastener 86.

In a case where the coil is provided on one of the inner circumference or the outer circumference of the fastener 86 in the step of providing the coil in the proximity of the fastener 86, the fastener 86 is heated by electromagnetic induction, and thereby it is possible to soften the resin part 74, 76 around the fastener 86.

In a case where the coil is provided on each of the first side and the second side of the fastener 86 in the extension direction in the step of providing the coil in the proximity of the fastener 86, the fastener 86 is heated by electromagnetic induction, and thereby it is possible to soften the resin around the fastener 86.

### [Method for disassembling a wind turbine]

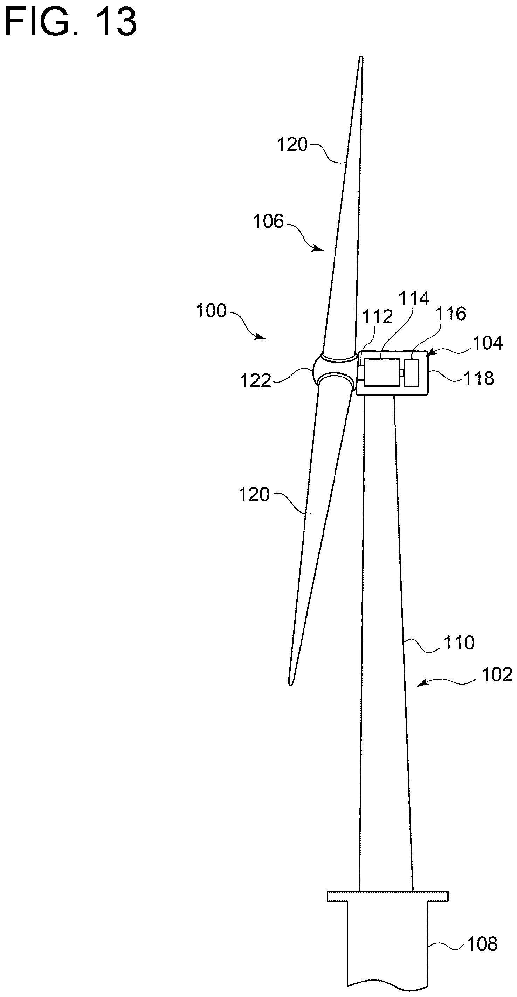

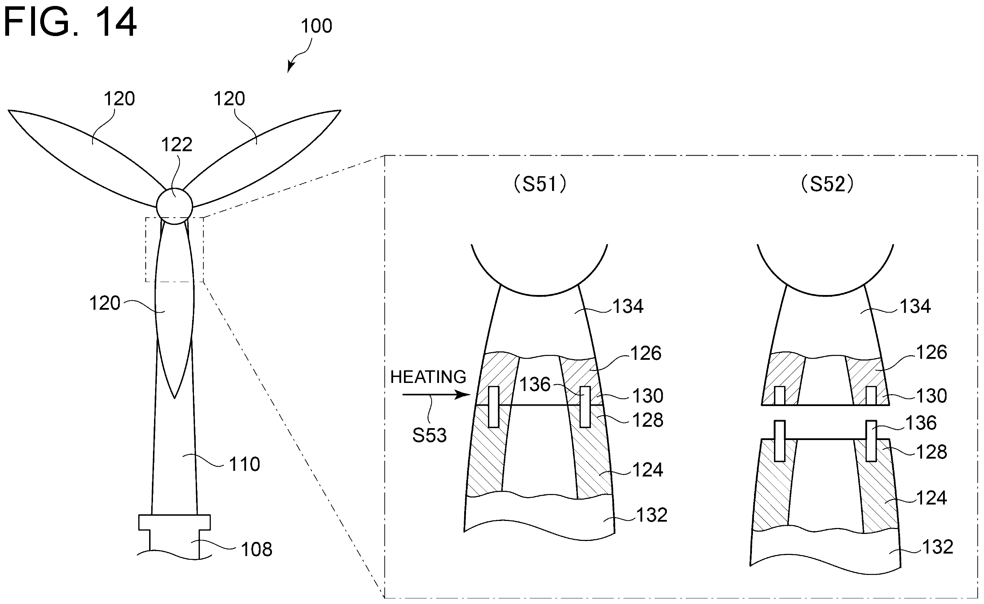

FIG. 13 is a schematic diagram of a wind turbine 100. FIG. 14 is a schematic diagram showing a method for disassembling the wind turbine 100 depicted in FIG. 13.

As depicted in FIG. 13, the wind turbine 100 includes a support-structure part 102, a generator part 104, and a rotor part 106. The support-structure part 102 includes a foundation 108, a tower 110, a yaw control part (not depicted), for instance. The generator part 104 includes a driving shaft 112, a gearbox 114, a generator 116, a controller (not depicted), for instance, and is housed in a housing 118 called a nacelle. The rotor part 106 includes a wind turbine blade 120, a rotor head 122, and the like.

As depicted in FIG. 13, the wind turbine blade 120 includes a first member 132 disposed at the tip end side across the portion 128,130 of the resin part 124,126 and a second member 134 disposed at the side of the rotor head 122 to be joined to the first member 132. The first member 132 and the second member 134 are fastened by a fastener 136 made of metal and embedded in the resin part 128, 130 disposed on at least one of the first member 132 or the second member 134. The fastener 136 made of metal is, for instance a bolt and a nut, one of which is embedded in the first member 132 and the other one of which is embedded in the second member 134.

A method for disassembling a wind turbine 100 depicted in FIG. 14 is a method for disassembling the wind turbine blade 120, and the yaw control device and the controller are dismantled before disassembling the wind turbine blade 120. As depicted in FIG. 14, the method for disassembling the wind turbine 100 includes disassembling a plurality of (three) wind turbine blades 120 in sequence, and the wind turbine blade 120 to be disassembled is rotated and fixed along the direction of gravity.

The method for disassembling the wind turbine 100 includes a step (S51) of softening at least a portion 130 (128) of the resin part 126 (124) of the wind turbine blade 120 by heating the portion 130 (128), and a step (S52) of separating a first member 132 disposed at the tip end side of the wind turbine blade 120 from a second member 134 at the side of the rotor head 122 opposite to the tip end side across the softened portion 130 (128). The step (S51) of softening at least the portion 130 (128) of the resin part 126 (124) of the wind turbine blade 120 by heating the portion 130 (128) includes a step (S53) of heating the resin part 130 (128) in which the fastener 136 is embedded. The resin part 130 (128) to be heated is the portion 130 (128) of the resin part 126 (124) of one of the first member 132 or the second member 134 in which the fastener 136 is embedded, and it is unnecessary to heat both of the first member 132 and the second member 134. In the example illustrated in FIG. 14, the portion 130 of the resin part 126 of the second member 134 disposed at the upper side in the direction of gravity is heated. Alternatively, the portion 128 of the resin part 124 of the first member 132 disposed at the lower side may be heated.

In the step (S52) of separating the first member 132 at the tip end side of the wind turbine blade 120 from the second member 134 at the side of the rotor head 122 opposite to the tip end side across the softened portion 130 (128), the fastener 136 comes out from the resin part 130 (128) of one of the first member 132 or the second member 134 in which the fastener 136 is embedded, and thereby the other one of the first member 132 or the second member 134 is separated.

The step (S52) of separating the first member 132 at the tip end side of the wind turbine blade 120 from the second member 134 at the side of the rotor head 122 opposite to the tip end side across the softened portion 130 (128) may include a step of lowering the first member 132 by gravity G, as in the method for disassembling the structure 30 according to the above described Embodiment 2. In a case where the first member 132 falling by gravity G becomes a problem, the first member 132 may be retained by a hook and a wire or the like in advance, and then the first member 132 may be lowered slowly toward the ground or sea. Alternatively, the first member 132 may be lowered slowly toward the ground or sea using a wire or a rope or the like provided diagonally with respect to the first member 132. In the example depicted in FIG. 14, the portion 130 of the resin part 126 of the second member 134 disposed at the upper side in the direction of gravity is heated so that the fastener 136 comes out from the second member 134 and remains inside the first member 132 disposed at the lower side. Alternatively, the portion 128 of the resin part 124 of the first member 132 may be heated so that the fastener 136 comes out from the first member 132 and remains inside the second member 134.

The step (S52) of softening at least the portion 130 (128) of the resin part 126 (124) by heating the portion 130 (128) may include a step of applying an electric current to an electrical heating wire wrapped around at least the portion 130 (128) of the resin part 126 (124), as in the method for disassembling the structure 30 according to the above described Embodiment 2.

The step (S52) of softening at least the portion 130 (128) of the resin part 126 (124) by heating the portion 130 (128) may include a step of exposing a part of the fastener 136 from the resin part 128, 130, and a step of applying an electric current from the part of the fastener 136.

The step (S52) of softening at least the portion 130 (128) of the resin part 126 (124) by heating the portion 130 (128) may include a step of providing a coil in the proximity of the fastener 136 and a step of applying a high-frequency electric current to the coil 48, as in the method for disassembling the structure 30 according to the above described Embodiment 2.

In the step of providing the coil in the proximity of the fastener 136, for instance, the coil may be provided on an inner circumference or an outer circumference of the fastener 136. As long as the coil is capable of heating the fastener 136 by electromagnetic induction, the coil may be disposed on one of the inner circumference or the outer circumference of the fastener 136, or on both of the inner circumference and the outer circumference of the fastener 136.

In the step of providing the coil in the proximity of the fastener 136, the coil may be provided on each of the first side and the second side of the fastener 136 in the extension direction.

According to the method for disassembling the wind turbine 100 depicted in FIG. 13, the portion 130 (128) of the resin part 124, 126 in which the fastener 136 is embedded is heated to soften the portion 130 (128) of the resin part 124, 126, and thereby the first member 132 is separated from the second member 134. Accordingly, it is possible to suppress scattering of dust upon separation of the first member 132 from the second member 134.

In a case where the wind turbine blade 120 including the resin part 124, 126 at least partially is a wind turbine blade that extends in the direction of gravity and the step (S52) of separating the first member 132 disposed at the tip end side of the wind turbine blade 120 from the second member 134 disposed at the side of the rotor head 122 includes a step of lowering the first member 132 by gravity G, it is possible to separate the first member 132 from the second member 134 without using a heavy machine or the like.

In a case where the step (S51) of softening at least the portion 130 (128) of the resin part 124, 126 by heating the portion 130 (128) includes a step of applying an electric current to an electrical heating wire wrapped around the portion 130 (128) of the resin part 124, 126, it is possible to heat the resin part 130 (128) and soften the resin part 130 (128).

**In** a case where the step (S51) of softening at least the portion 130 (128) of the resin part 124, 126 by heating the portion 130 (128) includes a step of exposing a part of the fastener 136 from a portion 128, 130 of the resin part 124, 126 and a step of applying an electric current from the part of the fastener 136, the fastener 136 is heated, and it is possible to soften the resin part 128, 130 around the fastener 136.

In a case where the step (S51) of softening at least the portion 130 (128) of the resin part 124 ,126 by heating the portion 130 (128) includes a step of providing the coil in the proximity of the fastener 136 and a step of applying a high-frequency electric current to the coil, the fastener 136 is heated by electromagnetic induction, and thereby it is possible to soften the resin part 130, 128 around the fastener 136.

In a case where the coil is provided on one of the inner circumference or the outer circumference of the fastener 136 in the step pf providing the coil in the proximity of the fastener 136, the fastener 136 is heated by electromagnetic induction, and thereby it is possible to soften the resin part 130 (128) around the fastener 136.

In a case where the coil is provided on each of the first side and the second side of the fastener 136 in the extension direction in the step of providing the coil in the proximity of the fastener 136, the fastener 136 is heated by electromagnetic induction, and thereby it is possible to soften the resin part 130 (128) around the fastener 136.

The contents described in the above respective embodiments can be understood as follows, for instance.
[1] A method for disassembling a structure according to an aspect is a method for disassembling a structure (10) including a resin part (12) at least partially and includes a step (S1) of softening at least a portion (14) of the resin part (12) by heating the portion (14); and a step (S2) of separating a portion (16) at a first side of the structure (10) from a portion (18) at a second side opposite to the first side across the softened portion (14).

According to the method for disassembling a structure (10) according to the present disclosure, at least the portion (14) of the resin part (12) of the structure (10) is softened by heating the portion (14), and the portion (16) at the first side of the structure (10) is separated from the portion (18) at the second side opposite to the first side across the softened portion (14), whereby it is possible to suppress scattering of dust upon disassembling of the structure (10).

[2] In the method for disassembling a structure according to another aspect, in the method according to the above [1], the structure (30) including the resin part (32 (34)) at least partially includes a first member (14) disposed at the first side and a second member (42) disposed at the second side and joined to the first member (40), the first member (40) and the second member (42) are fastened by a fastener (44) which is made of metal and embedded in the resin part (36 (38)) disposed on at least one of the first member (40) or the second member (42), and the step (S11) of softening the portion includes a step (S13) of heating the resin part (36 (38)) in which the fastener (44) is embedded.

According to the above method, the resin part (36 (38)) in which the fastener (44) is embedded is heated to soften the resin part (36 (38)), and thereby the first member (40) is separated from the second member (42). Accordingly, it is possible to suppress scattering of dust upon separation of the first member (40) from the second member (42).

[3] In the method for disassembling a structure according to yet another aspect, in the method according to the above [1] or [2], the structure (30) including the resin part (32 (34)) at least partially is a structure that extends in the direction of gravity and the step (S12) of separating the first side of the structure (30) from the second side includes a step (S14) of lowering the first side by gravity (G).

According to the above method, the first side is lowered by the gravity (G), and thus it is possible to separate the first side from the second side without using a heavy machine or the like.

[4] In the method for disassembling a structure according to yet another aspect, in the method according to any one of the above [1] to [3], the step (S11) of softening the portion (36 (38)) includes a step (S15) of applying an electric current to an electrically heating wire (46) wrapped around the resin part (36 (38)).

According to the above method, by applying an electric current to an electrically heating wire (46) wrapped around the resin part (36 (38)), it is possible to heat the resin part (36 (38)) and soften the resin part (36 (38)).

[5] In the method for disassembling a structure according to yet another aspect, in the above method [2], the step (S11) of heating the resin part (36, 38) includes: a step (S17) of exposing a part of the fastener (44) from the resin part (36, 38); and a step (S17) of applying an electric current from the part of the fastener (44).

According to the above method, a part of the fastener (44) is exposed from the resin part (36, 38) and an electric current is applied from the part of the fastener (44) so that the fastener (44) is heated, and thus it is possible to soften the resin around the fastener (44).

[6] In the method for disassembling a structure according to yet another aspect, in the above method [2], the step (S11) of heating the resin part (36 (38)) includes: a step (S18) of providing a coil (48 (50)) in the proximity of the fastener (44); and a step (S19) of applying a high-frequency electric current to the coil (48 (50)).

According to the above method, the coil (48 (50)) is provided in the proximity of the fastener (44) and a high-frequency electric current is applied to the coil (48 (50)), so that the fastener (44) is heated by electromagnetic induction, and thereby it is possible to soften the resin around the fastener (44).

[7] In the method for disassembling a structure according to yet another aspect, in the above method [6], the step (S18) of providing the coil (48 (50)) in the proximity includes providing the coil (48 (50)) on an inner circumference or an outer circumference of the fastener (44).

According to the above method, the coil (48(50)) is provided on the outer circumference or the inner circumference of the fastener (44) so that the fastener (44) is heated by electromagnetic induction, and thereby it is possible to soften the resin around the fastener (44).

[8] In a method for disassembling a structure according to yet another aspect, in the above method [6], the step (S18) of providing the coil (50 (52)) in the proximity includes providing the coil (50 (52)) on each of a first side and a second side of the fastener (44) in an extension direction.

According to the above method, the coil (50 (52)) is provided on each of the first side and the second side of the fastener (44) in the extension direction so that the fastener (44) is heated by electromagnetic induction, and thereby it is possible to soften the resin around the fastener (44).

### Reference Signs List

10 Structure
12 Resin part
14 Portion of the resin part
16 Portion at the first side of the structure
18 Portion at the second side of the structure
20 Electrical heating wire
30 Structure
32, 34 Resin part
36, 38 Portion of the resin part
40 First member
42 Second member
44 Fastener
46 Electrical heating wire
48,50 Coil
52,54 Coil
60 Meteorological tower
62 Foundation
64 Tower
66 Tower body
68 Branch-shaped protrusion
70, 72 Measurement instrument
74, 76 Resin part
78, 80 Portion of the resin part
82 First member
84 Second member
86 Fastener
100 Wind turbine
102 Support-structure part
104 Generator part
106 Rotor part
108 Foundation
110 Tower
112 Driving shaft
114 Gearbox
116 Generator
118 Housing
120 Wind turbine blade
122 Rotor head
124, 126 Resin part
128,130 Portion of the resin part
132 First member
134 Second member
136 Fastener

## Claims

1. A method for disassembling a structure including a resin part at least partially, the method comprising:
a step of softening at least a portion of the resin part by heating the portion; and
a step of separating a portion at a first side of the structure from a portion at a second side opposite to the first side across the softened portion.

2. The method for disassembling a structure according to claim 1,
wherein the structure including the resin part at least partially includes a first member disposed at the first side and a second member disposed at the second side and joined to the first member,
wherein the first member and the second member are fastened by a fastener which is made of metal and embedded in the resin part disposed on at least one of the first member or the second member, and
wherein the step of softening the portion includes a step of heating the resin part in which the fastener is embedded.

3. The method for disassembling a structure according to claim 1,
wherein the structure including the resin part at least partially is a structure which extends in a direction of gravity, and
wherein the step of separating the first side of the structure from the second side includes a step of lowering the first side by gravity.

4. The method for disassembling a structure according to claim 1,
wherein the step of softening the portion includes a step of applying an electric current to an electrically heating wire wrapped around the resin part.

5. The method for disassembling a structure according to claim 2,
wherein the step of heating the resin part includes:
a step of exposing a part of the fastener from the resin part; and
a step of applying an electric current from the part of the fastener.

6. The method for disassembling a structure according to claim 2,
wherein the step of heating the resin part includes:
a step of providing a coil in the proximity of the fastener; and
a step of applying a high-frequency electric current to the coil.

7. The method for disassembling a structure according to claim 6,
wherein the step of providing the coil in the proximity includes providing the coil on an inner circumference or an outer circumference of the fastener.

8. The method for disassembling a structure according to claim 6,
wherein the step of providing the coil in the proximity includes providing the coil on each of a first side and a second side of the fastener in an extension direction.
